# EUROPEAN PATENT SPECIFICATION

(11) **EP 4 488 201 B1**
(45) Date of publication and mention of the grant of the patent: **04.03.2026**
(21) Application number: 23784142.4
(22) Date of filing: 14.03.2023
(51) Int. Cl.: B65G 1/04, B65G 1/137

(54) **OUTBOUND MATERIAL BOX DETERMINATION METHODS AND APPARATUSES, AND DEVICE**
VERFAHREN UND VORRICHTUNGEN ZUR BESTIMMUNG VON AUSGANGSMATERIALSCHACHTELN UND VORRICHTUNG
PROCÉDÉS ET APPAREILS DE DÉTERMINATION DE CAISSE DE MATÉRIAUX SORTANTS, ET DISPOSITIF

(30) Priority: 08.04.2022 CN 202210367890
(43) Date of publication of application: 08.01.2025
(73) Proprietor: Shenzhen Kubo Software Co., Ltd, Shenzhen, Guangdong 518100 (CN); Hai Robotics Co., Ltd., Shenzhen, Guangdong 518000 (CN)
(72) Inventor: HE, Zhangyi, Shenzhen, Guangdong 518100 (CN); ZHANG, Min, Shenzhen, Guangdong 518100 (CN); SONG, Tongjuan, Shenzhen, Guangdong 518000 (CN)
(74) Representative: Nederlandsch Octrooibureau
(86) International application number: PCT/CN2023/081463
(87) International publication number: WO 2023/193578

(56) References cited:
- WO-A1-2021/160445
- CN-A- 109 472 527
- CN-A- 110 155 586
- CN-A- 112 132 522
- CN-A- 112 678 407
- CN-A- 113 780 910
- CN-A- 113 947 317
- CN-A- 114 701 785
- DE-A1- 10 125 601

## Description

### TECHNICAL FIELD

The present disclosure relates to the field of warehousing and logistics technologies, and in particular, to a method and an apparatus for determining to-be-outbound containers and a device.

### BACKGROUND OF THE INVENTION

With the development of science and technology, warehousing systems become more intelligent, and users also have increasing efficiency requirements for warehousing systems. To ensure the stocking efficiency of materials, when materials need to be stocked, a control device usually outputs completely empty containers, and then the materials are loaded manually or by a robotic arm into the empty containers for stocking. However, such a container outbound manner is unvaried. As a result, stocking and warehousing are substandard, and warehousing density is low, making it impossible to meet different demands for different materials.

Chinese patent application CN110155586A discloses a material storage method, a material storage device and a terminal. The method comprises the following procedures of acquiring material information of materials passing through a warehousing conveyor belt; acquiring box information of a storage box; determining a first target material storage box from the material storage box according to the material information and the material box information; and storing the materials in the first target storage box, specifically, automatic storage of scattered materials is achieved, and reasonable storage of scattered materials can be achieved to the maximum extent.

Chinese patent CN113947317B discloses a material warehousing method, a material warehousing method, an apparatus, a scheduling device and a system, the material warehousing method comprising: for each type of material to be stored, obtaining the storage quantity of each batch of the material to be stored of the type; allocating the slots of the material box for the material to be stored according to the batch to which the material to be stored of the type belongs; if the material storage quantity of the first slot corresponding to the previous batch of the material to be stored of the current batch is less than the upper limit storage quantity corresponding to the type, then determining the slots of the material box corresponding to each material to be stored in the current batch according to the storage quantity of the material to be stored in the current batch and the material storage quantity of the first slot, so that the slot corresponding to at least one material to be stored in the current batch is the first slot; generating the storage instruction of the material to be stored of the type according to the slots of the material box corresponding to each batch of the material to be stored, thereby realizing the storage of mixed batch materials and improving the space utilization rate of the material box.

Chinese patent application CN112132522A discloses a material warehousing method and device, and a management device. The method comprises the steps of determining a shelf type corresponding to a to-be-warehoused target material; in existing shelves meeting the shelf type, determining candidate shelves matched with the target material, and selecting an optimal shelf used for storing the target material from the candidate shelves by adopting a selection strategy corresponding to the shelf type; and sending the identifier of the optimal goods shelf to a mobile robot so as to trigger the mobile robot to carry the optimal shelf to a warehousing workstation, thereby warehousing the target material. By using the method provided by the invention, the shelf for storing the target material can be automatically screened out for the target material to be warehoused.

Chinese patent application CN113780910A discloses a warehouse-management method that controls how goods are placed into multiple containers for order fulfillment. It determines container quantities, monitors filling states, captures item information.

### SUMMARY OF THE INVENTION

The present disclosure provides a method and an apparatus for determining to-be-outbound containers and a device, so that to-be-outbound containers can be determined and outputted according to different demands for materials, thereby improving the accuracy of container outbound, further improving the appropriateness of warehousing, and improving warehouse utilization. The invention is set out in the appended set of claims.

According to a first aspect, the present disclosure provides a method for determining to-be-outbound containers, including: receiving demand information for required containers, where the demand information includes one or more pieces of the following information: a container selection strategy, a container type, the quantity of containers, the quantity of empty compartments in a container, a total volume of to-be-stocked materials, the total quantity of to-be-stocked materials, container codes, and a stock keeping unit (SKU); determining to-be-outbound containers according to the demand information for required containers; and performing an outbound operation on the to-be-outbound containers, to allow to-be-stocked materials to be placed in the to-be-outbound containers that are performed the outbound operation for stocking.

Optionally, the demand information includes a container selection strategy, a container type, and the quantity of containers, the container selection strategy is selecting completely empty containers, and the determining to-be-outbound containers according to the demand information for required containers includes: determining, from a container warehouse according to the quantity of containers indicated in the demand information, completely empty containers matching a container type indicated in the demand information as the to-be-outbound containers.

Optionally, the determining, from a container warehouse according to the quantity of containers indicated in the demand information, completely empty containers matching a container type indicated in the demand information as the to-be-outbound containers includes: using completely empty containers matching a container type indicated in the demand information in the container warehouse as preliminary to-be-outbound containers; acquiring distances between the preliminary to-be-outbound containers and corresponding outbound points; and selecting, from the preliminary to-be-outbound containers according to the distances and the quantity of containers, containers corresponding to the quantity of containers as the to-be-outbound containers.

Optionally, the demand information includes a container selection strategy, a container type, and the quantity of empty compartments in a container, the container selection strategy is selecting containers according to the quantity of empty compartments in a container, and the determining to-be-outbound containers according to the demand information for required containers includes: determining containers with a container type matching a container type in the demand information and having empty compartments in a container warehouse as first preselected containers; and determining the to-be-outbound containers from the first preselected containers according to the quantity of empty compartments in a container in the demand information, to make a total sum of the quantity of empty compartments in all the to-be-outbound containers greater than or equal to the quantity of empty compartments in a container in the demand information.

Optionally, the determining the to-be-outbound containers from the first preselected containers according to the quantity of empty compartments in a container in the demand information includes: performing sequential addition according to an ascending order or a descending order of the quantity of empty compartments in the first preselected containers; and if an obtained sum value of the quantity of empty compartments is less than the quantity of empty compartments in a container in the demand information when an addition reaches an N^{th} container and an obtained sum value is greater than or equal to the quantity of empty compartments in a container in the demand information when an addition reaches an (N+1)^{th} container, determining the first container to an (N+1)^{th} container as the to-be-outbound containers.

Optionally, the demand information includes a container selection strategy, a stock keeping unit (SKU), and the total volume of to-be-stocked materials or the total quantity of to-be-stocked materials, the container selection strategy is selecting containers according to an SKU, and the determining to-be-outbound containers according to the demand information for required containers includes: determining containers with a loaded SKU consistent with an SKU in the demand information in a container warehouse as second preselected containers; and selecting the to-be-outbound containers from the second preselected containers according to the total volume or the total quantity of to-be-stocked materials, to make a sum value of remaining capacities of all the to-be-outbound containers greater than or equal to the total volume of to-be-stocked materials or the total quantity of to-be-stocked materials.

Optionally, the selecting the to-be-outbound containers from the second preselected containers according to the total volume or the total quantity of to-be-stocked materials, to make a sum value of remaining capacities of all the to-be-outbound containers greater than or equal to the total volume of to-be-stocked materials or the total quantity of to-be-stocked materials includes: acquiring remaining capacities of the second preselected containers, performing sequential addition according to an ascending order or a descending order of the remaining capacities, and if an obtained sum value is less than the total volume of to-be-stocked materials or the total quantity of to-be-stocked materials when an addition reaches an N^{th} container and an obtained sum value is greater than or equal to the total volume of to-be-stocked materials or the total quantity of to-be-stocked materials when an addition reaches an (N+1)^{th} container, determining the first container to an (N+1)^{th} container as the to-be-outbound containers.

Optionally, the method further includes: if a sum value of remaining capacities of all the second preselected containers is less than the total volume of to-be-stocked materials or the total quantity of to-be-stocked materials, determining whether a historical packing record corresponding to an SKU indicated in the demand information can be acquired; if the historical packing record can be acquired, determining a container type of containers with the largest use count in the historical packing record as a container type of the to-be-outbound containers; and determining the to-be-outbound containers according to a container type of the to-be-outbound containers, a sum value of remaining capacities of the second preselected containers, and the total volume of to-be-stocked materials or the total quantity of to-be-stocked materials indicated in the demand information.

Optionally, the determining the to-be-outbound containers according to a container type of the to-be-outbound containers, a sum value of remaining capacities of the second preselected containers, and the total volume of to-be-stocked materials or the total quantity of to-be-stocked materials indicated in the demand information includes: determining a capacity difference value according to a sum value of remaining capacities of the second preselected containers and a total volume or the total quantity of to-be-stocked materials indicated in the demand information; selecting at least one completely empty container corresponding to a container type of the to-be-outbound containers, to make a total capacity of a completely empty container corresponding to a container type of the to-be-outbound containers greater than or equal to the capacity difference value; and determining the second preselected containers and the at least one completely empty container corresponding to a container type of the to-be-outbound containers as the to-be-outbound containers.

Optionally, the demand information includes a container selection strategy and container codes, the container selection strategy is selecting containers according to container codes, and the determining to-be-outbound containers according to the demand information for required containers includes: determining containers with code information consistent with container codes indicated in the demand information in a container warehouse as the to-be-outbound containers.

Optionally, the demand information includes a volume of to-be-stocked materials and the total quantity of to-be-stocked materials, and the determining to-be-outbound containers according to the demand information for required containers includes: determining a container type of the to-be-outbound containers according to the volume of to-be-stocked materials; determining containers with a container type consistent with a container type of the to-be-outbound containers in a container warehouse as third preselected containers; and determining the to-be-outbound containers according to the total quantity of to-be-stocked materials, a preset proportion coefficient, and the quantity of vacant compartments of the third preselected containers.

Optionally, the determining to-be-outbound containers according to the demand information for required containers includes: determining the to-be-outbound containers according to the demand information for required containers and position information of the outbound points.

According to a second aspect, the present disclosure provides a method for determining to-be-outbound containers, including: acquiring feature information of to-be-stocked materials, where the feature information of to-be-stocked materials includes at least one piece of the following information: the quantity of to-be-stocked materials and an SKU; determining a container selection strategy according to the feature information of to-be-stocked materials; and sending the container selection strategy.

Optionally, the feature information of to-be-stocked materials includes the quantity of to-be-stocked materials, and the determining a container selection strategy according to the feature information of to-be-stocked materials includes: if the quantity of to-be-stocked materials is greater than a first preset threshold, determining that the container selection strategy is selecting completely empty containers.

Optionally, if the feature information of to-be-stocked materials includes an SKU and the quantity of to-be-stocked materials and the quantity of to-be-stocked materials is greater than a second preset threshold, the container selection strategy is selecting containers according to an SKU.

Optionally, if the feature information of to-be-stocked materials includes an SKU, the container selection strategy is selecting containers according to container codes.

According to a third aspect, the present disclosure provides an apparatus for determining to-be-outbound containers, the apparatus including:
a receiving module, configured to receive demand information for required containers, where the demand information includes one or more pieces of the following information: a container selection strategy, a container type, the quantity of containers, the quantity of empty compartments in a container, a total volume of to-be-stocked materials, the total quantity of to-be-stocked materials, container codes, and an SKU; and
a processing module, configured to determine to-be-outbound containers according to the demand information for required containers, where
the processing module is further configured to perform an outbound operation on the to-be-outbound containers, to allow to-be-stocked materials to be placed in the to-be-outbound containers that are performed the outbound operation for stocking.

Optionally, the demand information includes a container selection strategy, a container type, and the quantity of containers, the container selection strategy is selecting completely empty containers, and the processing module is specifically configured to determine, from a container warehouse according to the quantity of containers indicated in the demand information, completely empty containers matching the container type indicated in the demand information as the to-be-outbound containers.

Optionally, the processing module is specifically configured to: use the completely empty containers matching the container type indicated in the demand information in the container warehouse as preliminary to-be-outbound containers; acquire distances between the preliminary to-be-outbound containers and corresponding outbound points; and select, from the preliminary to-be-outbound containers according to the distances and the quantity of containers, containers corresponding to the quantity of containers as the to-be-outbound containers.

Optionally, the demand information includes a container selection strategy, a container type, and the quantity of empty compartments in a container, the container selection strategy is selecting containers according to the quantity of empty compartments in a container, and the processing module is specifically configured to: determine containers with a container type matching the container type in the demand information and having empty compartments in a container warehouse as first preselected containers; and determine the to-be-outbound containers from the first preselected containers according to the quantity of empty compartments in a container in the demand information, to make a total sum of the quantity of empty compartments in all the to-be-outbound containers greater than or equal to the quantity of empty compartments in a container in the demand information.

Optionally, the processing module is specifically configured to: perform sequential addition according to an ascending order or a descending order of the quantity of empty compartments in the first preselected containers; and if an obtained sum value of the quantity of empty compartments is less than the quantity of empty compartments in a container in the demand information when the addition reaches an N^{th} container and the obtained sum value is greater than or equal to the quantity of empty compartments in a container in the demand information when the addition reaches an (N+1)^{th} container, determine the first container to the (N+1)^{th} container as the to-be-outbound containers.

Optionally, the demand information includes a container selection strategy, a stock keeping unit (SKU), and a total volume of to-be-stocked materials or the total quantity of to-be-stocked materials, the container selection strategy is selecting containers according to an SKU, and the processing module is specifically configured to: determine containers with a loaded SKU consistent with the SKU in the demand information in a container warehouse as second preselected containers; and select the to-be-outbound containers from the second preselected containers according to the total volume or the total quantity of to-be-stocked materials, to make a sum value of remaining capacities of all the to-be-outbound containers greater than or equal to the total volume of to-be-stocked materials or the total quantity of to-be-stocked materials.

Optionally, the processing module is specifically configured to: acquire remaining capacities of the second preselected containers, perform sequential addition according to an ascending order or a descending order of the remaining capacities, and if an obtained sum value is less than the total volume of to-be-stocked materials or the total quantity of to-be-stocked materials when the addition reaches an N^{th} container and the obtained sum value is greater than or equal to the total volume of to-be-stocked materials or the total quantity of to-be-stocked materials when the addition reaches an (N+1)^{th} container, determine the first container to the (N+1)^{th} container as the to-be-outbound containers.

Optionally, the processing module is further configured to: if a sum value of remaining capacities of all the second preselected containers is less than the total volume of to-be-stocked materials or the total quantity of to-be-stocked materials, determine whether a historical packing record corresponding to the SKU indicated in the demand information can be acquired; if the historical packing record can be acquired, determine a container type of containers with the largest use count in the historical packing record as a container type of the to-be-outbound containers; and determine the to-be-outbound containers according to the container type of the to-be-outbound containers, the sum value of remaining capacities of the second preselected containers, and the total volume of to-be-stocked materials or the total quantity of to-be-stocked materials indicated in the demand information.

Optionally, the processing module is specifically configured to: determine a capacity difference value according to the sum value of remaining capacities of the second preselected containers and the total volume or the total quantity of to-be-stocked materials indicated in the demand information; select at least one completely empty container corresponding to the container type of the to-be-outbound containers, to make a total capacity of the completely empty container corresponding to the container type of the to-be-outbound containers greater than or equal to the capacity difference value; and determine the second preselected containers and the at least one completely empty container corresponding to the container type of the to-be-outbound containers as the to-be-outbound containers.

Optionally, the processing module is specifically configured to: determine containers with code information consistent with the container codes indicated in the demand information in a container warehouse as the to-be-outbound containers.

Optionally, the processing module is specifically configured to: determine a container type of the to-be-outbound containers according to the volume of to-be-stocked materials; determine containers with a container type consistent with the container type of the to-be-outbound containers in a container warehouse as third preselected containers; and determine the to-be-outbound containers according to the total quantity of to-be-stocked materials, a preset proportion coefficient, and the quantity of vacant compartments of the third preselected containers.

Optionally, the processing module is specifically configured to determine the to-be-outbound containers according to the demand information for required containers and position information of the outbound points.

According to a fourth aspect, the present disclosure further provides an apparatus for determining to-be-outbound containers, the apparatus including:
an acquisition module, configured to acquire feature information of to-be-stocked materials, where the feature information of to-be-stocked materials includes at least one piece of the following information: the quantity of to-be-stocked materials and an SKU;
a processing module, configured to determine a container selection strategy according to the feature information of to-be-stocked materials; and
a sending module, configured to send the container selection strategy.

Optionally, the feature information of to-be-stocked materials includes the quantity of to-be-stocked materials, and the processing module is specifically configured to: if the quantity of to-be-stocked materials is greater than a first preset threshold, determine that the container selection strategy is selecting completely empty containers.

Optionally, if the feature information of to-be-stocked materials includes an SKU and the quantity of to-be-stocked materials and the quantity of to-be-stocked materials is greater than a second preset threshold, the container selection strategy is selecting containers according to an SKU.

Optionally, if the feature information of to-be-stocked materials includes an SKU, the container selection strategy is selecting containers according to container codes.

According to a fifth aspect, the present disclosure provides a control device, including: at least one processor; and a memory communicatively connected to the at least one processor, where the memory is configured to store instructions executable by the at least one processor, and the instructions, when executed by the at least one processor, cause the at least one processor to perform the method provided in the first aspect and the optional manners of the first aspect or the second aspect and the optional manners of the second aspect.

According to a sixth aspect, the present disclosure provides a computer-readable storage medium. The computer-readable storage medium is configured to store computer-executable instructions, and the computer-executable instructions, when being executed by a processor, implement the method provided in the first aspect and the optional manners of the first aspect or the second aspect and the optional manners of the second aspect.

According to a seventh aspect, the present disclosure provides a computer program product, including a computer program/instructions, where the computer program/instructions, when being executed by a processor, implement the method provided in the first aspect and the optional manners of the first aspect or the second aspect and the optional manners of the second aspect.

For the method and apparatus for determining to-be-outbound containers and the device provided in the present disclosure, demand information for required containers is received, where the demand information includes one or more pieces of the following information: a container selection strategy, a container type, the quantity of containers, the quantity of empty compartments in a container, a total volume of to-be-stocked materials, the total quantity of to-be-stocked materials, container codes, and an SKU; to-be-outbound containers are determined according to the demand information for required containers; and an outbound operation is performed on the to-be-outbound containers, to allow to-be-stocked materials to be placed in the to-be-outbound containers that are performed the outbound operation for stocking. Different demands for different materials for stocking can be met, thereby improving the accuracy of container outbound, further improving the appropriateness of warehousing, and improving warehouse utilization.

### BRIEF DESCRIPTION OF DRAWINGS

FIG. 1 is a schematic flowchart of a method for determining to-be-outbound containers according to the present disclosure;
FIG. 2 is a schematic diagram of an interaction interface of a control device according to the present disclosure;
FIG. 3 is another schematic flowchart of a method for determining to-be-outbound containers according to the present disclosure;
FIG. 4 is still another schematic flowchart of a method for determining to-be-outbound containers according to the present disclosure;
FIG. 5 is yet another schematic flowchart of a method for determining to-be-outbound containers according to the present disclosure;
FIG. 6 is yet another schematic flowchart of a method for determining to-be-outbound containers according to the present disclosure;
FIG. 7 is yet another schematic flowchart of a method for determining to-be-outbound containers according to the present disclosure;
FIG. 8 is yet another schematic flowchart of a method for determining to-be-outbound containers according to the present disclosure;
FIG. 9 is a schematic structural diagram of an apparatus for determining to-be-outbound containers according to the present disclosure;
FIG. 10 is another schematic structural diagram of an apparatus for determining to-be-outbound containers according to the present disclosure; and
FIG. 11 is a schematic structural diagram of a control device according to the present disclosure.

Definite embodiments of the present disclosure have been shown by means of the above accompanying drawings, which will be described in greater detail later. These accompanying drawings and textual descriptions are not intended to limit the scope of the concept of the present disclosure in any way, but rather to illustrate the concepts of the present disclosure for those skilled in the art with reference to particular embodiments.

### DETAILED DESCRIPTION

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. Implementations described in the following exemplary embodiments do not represent all implementations consistent with the present disclosure. On the contrary, the implementations are merely examples of an apparatus and a method that are consistent with some aspects of the present disclosure described in detail in claims.

With the development of science and technology, warehousing systems become more intelligent, and users also have increasing efficiency requirements for warehousing systems. To ensure the stocking efficiency of materials, when materials need to be stocked, a control device in a warehousing system usually outputs completely empty containers, and then the materials are loaded manually or by a robotic arm into the completely empty containers for stocking. However, such a manner has the following problems: First, such a manner requires a large number of completely empty containers, and a large warehousing space is required to store the completely empty containers. Second, an empty container cannot be necessarily filled with materials each time. Therefore, a waste of a storage space of containers is easily caused, resulting in low container utilization and low warehouse utilization. Third, in such a manner, only a completely empty container is used each time, and containers that are loaded with materials but still have a storage space in a warehouse are not taken into consideration, resulting in a waste of storage resources of such containers. Fourth, unvaried container outbound manners cannot meet different user demands, and user experience is poor.

To resolve the foregoing problems, the present disclosure provides a method for determining to-be-outbound containers. Through received demand information for required containers, to-be-outbound containers matching the demand information for containers are determined, and an outbound operation is performed on the to-be-outbound containers, to allow to-be-stocked materials to be placed in the to-be-outbound containers that are performed the outbound operation for stocking, so that diverse outbound containers can be determined according to the received demand information for required containers, thereby optimizing stock manners of materials, improving user experience, improving the accuracy of container outbound, further improving the appropriateness of warehousing, and improving warehouse utilization.

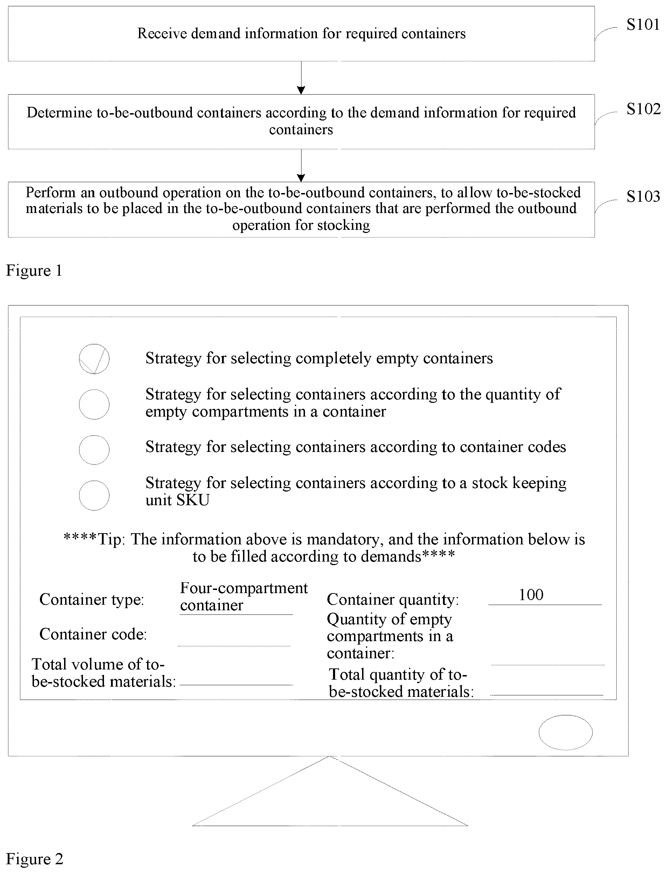

FIG. 1 is a schematic flowchart of a method for determining to-be-outbound containers according to the present disclosure. The method is applied to a control device. The control device may be a server. As shown in FIG. 1, the method includes the following steps.

S101: Receive demand information for required containers.

The demand information includes one or more pieces of the following information: a container selection strategy, a container type, the quantity of containers, the quantity of empty compartments in a container, a total volume of to-be-stocked materials, the total quantity of to-be-stocked materials, container codes, and an SKU.

The control device may receive demand information for required containers entered by a user of a stock workstation through an interaction interface; or may communicate with a terminal device of the stock workstation to acquire demand information for required containers sent by the terminal device of the stock workstation.

The user of the stock workstation may enter a plurality of pieces of demand information for required containers through the interaction interface of the stock workstation; or may check corresponding items to enter corresponding information.

FIG. 2 is a schematic diagram of an interaction interface of a control device according to the present disclosure. As shown in FIG. 2, the user of the stock workstation may enter the demand information for required containers through the interaction interface. For example, the demand information for required containers entered by the user through checking and filling is a strategy for selecting completely empty containers, four-compartment containers, and 100.

The container selection strategy may include container-related strategies, for example, a "strategy for selecting completely empty containers", a "strategy for selecting containers according to the quantity of empty compartments in a container", a "strategy for selecting containers according to container codes", and the like; and may further include material-related strategies, for example, a "strategy for selecting containers according to a stock keeping unit (SKU)", and the like. During actual use, naming manners of different strategies may be set according to actual cases. When to-be-stocked materials are of many types, the "strategy for selecting completely empty containers" is usually used. Optionally, when the "strategy for selecting completely empty containers" is used, the quantity of hit completely empty containers may be greater than the quantity of required containers. Unused completely empty containers after output may be stocked again as empty containers, or the "strategy for selecting containers according to the quantity of empty compartments in a container" may be used. When there are a large number of to-be-stocked materials and the materials are of a single type, the "strategy for selecting containers according to an SKU" may be used. When associated materials need to be stored in clusters, the "strategy for selecting containers according to container codes" may be used.

The container type is a compartment type of a container, for example, a single-compartment container, a double-compartment container, a four-compartment container, an eight-compartment container, and the like. The single-compartment container is a container that includes one bottom plate and four side plates only. The double-compartment container, the four-compartment container, the eight-compartment container, and the like are all multi-compartment containers. In addition to one bottom plate and four side plates, such a container further includes a partition disposed inside the container, and a storage space in the container is divided by the partition into a plurality of areas.

The quantity of containers is the total quantity of required containers.

The quantity of empty compartments in a container is the total quantity of required empty compartments.

The container codes are codes having a one-to-one correspondence with containers, and may be codes in any form.

S102: Determine to-be-outbound containers according to the demand information for required containers.

For example, if the received demand information for required containers is demand information shown in FIG. 2, 100 completely empty four-compartment containers are determined as the to-be-outbound containers from a container warehouse.

When there is a plurality of outbound points in the container warehouse, the container warehouse is usually divided into a plurality of areas according to positions and the quantity of outbound points. When being outbound, containers are outputted from an outbound point corresponding to an area of the containers.

Optionally, the determining to-be-outbound containers according to the demand information for required containers includes: determining the to-be-outbound containers according to the demand information for required containers and position information of the outbound points.

For example, an outbound point closest to a stock point is determined as a target outbound point, and then to-be-outbound containers are determined from a warehousing area corresponding to the target outbound point. When a large number of containers are required, containers may be outputted from a plurality of outbound points, to reach a balance between containers of different outbound points. For example, 20 empty containers are required. There are currently 100 empty containers in containers. 10 containers may be outputted from a first outbound point, and then 10 containers may be outputted from a second outbound point, so that the outbound efficiency of containers can be improved, and a balance can be reached between containers at different outbound points.

For example, the to-be-outbound containers are determined according to the demand information for required containers and the position information of the outbound points, or the to-be-outbound containers may be determined according to distances between containers and outbound points. For example, 20 empty containers are required. There are currently 100 empty containers in containers. 20 empty containers closest to outbound points are determined as the to-be-outbound containers. Specifically, for 100 empty containers, according to an ascending order of distances between the containers and the corresponding outbound points, containers corresponding to the quantity of containers in the demand information for required containers may be selected as the to-be-outbound containers from the 100 containers.

S103: Perform an outbound operation on the to-be-outbound containers, to allow to-be-stocked materials to be placed in the to-be-outbound containers that are performed the outbound operation for stocking.

Optionally, the to-be-outbound containers may be sequentially outputted.

For example, after the to-be-outbound containers are outputted to the workstation through a conveyor line, a worker or a robotic arm places to-be-stocked materials in the outbound containers. After a loading quantity of containers reaches a particular threshold or the loading of to-be-stocked materials is completed, the conveyor line or a robot performs a stocking operation on the containers.

Optionally, the method may further include outputting prompt information, used for prompting the user of how to place to-be-stocked materials.

Optionally, after to-be-stocked materials are placed in the containers, the materials may be further bound to the containers. After binding, the control device generates a stocking list for the containers, sends a stocking task, stocks to-be-stocked containers through the conveyor line. A code scanner on the conveyor line may scan container codes on the containers.

Specifically, through the scanning of a container code, in one aspect, it may be determined whether the container code can be successfully recognized, and if the container code cannot be successfully recognized, the container is conveyed to an abnormality port. In another aspect, it may be further determined whether a stocking task corresponding to the container is received. If the stocking task is received, the stocking operation is performed on the container. If the stocking task is not received, the container is conveyed to the abnormality port.

For the method for determining to-be-outbound containers provided in the present disclosure, demand information for required containers is received; to-be-outbound containers are determined according to the demand information for required containers; and an outbound operation is performed on the to-be-outbound containers, to allow to-be-stocked materials to be placed in the to-be-outbound containers that are performed the outbound operation for stocking. To-be-outbound containers of different types can be determined in combination with received demand information for required containers, so that diverse services can be provided to a user, thereby improving user experience, and a matching degree between to-be-stocked materials and outbound containers can be further improved, thereby improving container utilization.

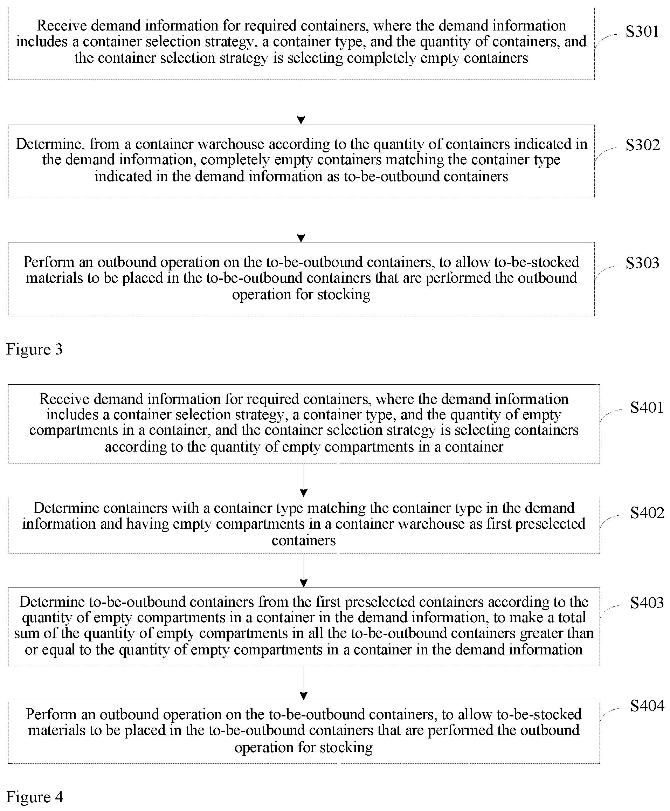

FIG. 3 is another schematic flowchart of a method for determining to-be-outbound containers according to the present disclosure. The method is applied to a control device. The control device may be a server. As shown in FIG. 3, the method includes the following steps.

S301: Receive demand information for required containers, where the demand information includes a container selection strategy, a container type, and the quantity of containers, and the container selection strategy is selecting completely empty containers.

For example, the container selection strategy is selecting completely empty containers; the container type is a double-compartment container; and the quantity of containers is 100.

S302: Determine, from a container warehouse according to the quantity of containers indicated in the demand information, completely empty containers matching the container type indicated in the demand information as to-be-outbound containers.

For example, 100 completely empty double-compartment containers are determined as the to-be-outbound containers from the container warehouse.

Optionally, the determining completely empty containers matching the container type indicated in the demand information as to-be-outbound containers includes: using the completely empty containers matching the container type indicated in the demand information in the container warehouse as preliminary to-be-outbound containers; acquiring distances between the preliminary to-be-outbound containers and corresponding outbound points; and selecting, from the preliminary to-be-outbound containers according to the distances and the quantity of containers, containers corresponding to the quantity of containers as the to-be-outbound containers.

That is, for completely empty containers with a container type matching a required container type in the container warehouse, distances between positions of containers and outbound points corresponding to the containers are acquired, and in combination with the distances and the quantity of containers, the to-be-outbound containers corresponding to the quantity of containers are selected.

For example, there may be one or more outbound points, the to-be-outbound containers are determined from preliminary containers with a distance from the corresponding outbound point being less than or equal to a preset distance. Alternatively, according to an ascending order of distances between the preliminary to-be-outbound containers and the corresponding outbound point, containers corresponding to the quantity of containers are selected as the to-be-outbound containers from the preliminary to-be-outbound containers.

Through the method, the outbound efficiency of containers can be improved, a balance between warehousing states of the outbound points is reached, and warehousing management is optimized.

S303: Perform an outbound operation on the to-be-outbound containers, to allow to-be-stocked materials to be placed in the to-be-outbound containers that are performed the outbound operation for stocking.

S303 has the same or corresponding technical features as S103. For detailed description, refer to S103. Details are not described.

For the method for determining to-be-outbound containers provided in the present disclosure, based on the foregoing embodiments, further, when a container selection strategy in demand information for required containers entered by a user is selecting completely empty containers, to-be-outbound containers meeting a demand of the user can be determined from a container warehouse according to a container type and the quantity of containers entered by the user, so that an individualized demand of the user is met and user experience and user satisfaction are improved.

FIG. 4 is still another schematic flowchart of a method for determining to-be-outbound containers according to the present disclosure. The method is applied to a control device. The control device may be a server. As shown in FIG. 4, the method includes the following steps.

S401: Receive demand information for required containers, where the demand information includes a container selection strategy, a container type, and the quantity of empty compartments in a container, and the container selection strategy is selecting containers according to the quantity of empty compartments in a container.

For example, the container selection strategy is selecting containers according to the quantity of empty compartments in a container; the container type is a four-compartment container; and the quantity of empty compartments in a container is 40.

S402: Determine containers with a container type matching the container type in the demand information and having empty compartments in a container warehouse as first preselected containers.

When the first preselected containers include a plurality of containers, different containers may have the different quantity of empty compartments or may have the same quantity of empty compartments.

S403: Determine to-be-outbound containers from the first preselected containers according to the quantity of empty compartments in a container in the demand information, to make a total sum of the quantity of empty compartments in all the to-be-outbound containers greater than or equal to the quantity of empty compartments in a container in the demand information.

In a possible implementation, the determining to-be-outbound containers from the first preselected containers according to the quantity of empty compartments in a container in the demand information includes: performing sequential addition according to an ascending order or a descending order of the quantity of empty compartments in the first preselected containers; and if an obtained sum value of the quantity of empty compartments is less than the quantity of empty compartments in a container in the demand information when the addition reaches an N^{th} container and the obtained sum value is greater than or equal to the quantity of empty compartments in a container in the demand information when the addition reaches an (N+1)^{th} container, determining the first container to the (N+1)^{th} container as the to-be-outbound containers.

Through the method, containers that are loaded with materials but still have empty compartments in a warehouse can be fully utilized, thereby improving container utilization. To-be-outbound containers are determined according to an ascending order of the quantity of empty compartments, so that containers with a small remaining storage capacity can be cleared in time, thereby improving the utilization of such containers. To-be-outbound containers are determined according to a descending order of the quantity of empty compartments, so that the quantity of to-be-outbound containers can be reduced, and the output speed of to-be-outbound containers and the stocking efficiency of to-be-stocked materials can be further improved.

In a possible implementation, the determining to-be-outbound containers from the first preselected containers according to the quantity of empty compartments in a container in the demand information includes: acquiring distances between the first preselected containers and corresponding outbound points; and determining the to-be-outbound containers from the first preselected containers according to the distances and the quantity of empty compartments in a container in the demand information, to make a total sum of the quantity of empty compartments in all the to-be-outbound containers greater than or equal to the quantity of empty compartments in a container in the demand information.

For example, the to-be-outbound containers are determined from the first preselected containers according to an ascending order of distances between the first preselected containers and the corresponding outbound points.

Through the method, the outbound efficiency of containers can be improved, a balance between warehousing states of the outbound points can be further reached, and warehousing management is optimized.

It is to be noted that the foregoing two possible implementations may be combined with each other, and a combined solution of the two implementations also belongs to the content of the present disclosure.

S404: Perform an outbound operation on the to-be-outbound containers, to allow to-be-stocked materials to be placed in the to-be-outbound containers that are performed the outbound operation for stocking.

S404 has the same or corresponding technical features as S103. For detailed description, refer to S103. Details are not described.

For the method for determining to-be-outbound containers provided in the present disclosure, based on the foregoing embodiments, when a container selection strategy in demand information entered by a user is selecting containers according to the quantity of empty compartments in a container, to-be-outbound containers meeting a compartment demand of the user can be determined from a container warehouse in combination with a container type and the quantity of empty compartments in a container that are entered by the user, so that while an individualized demand of the user is met and user experience and user satisfaction are improved, compared with existing technologies, container utilization can be further effectively improved.

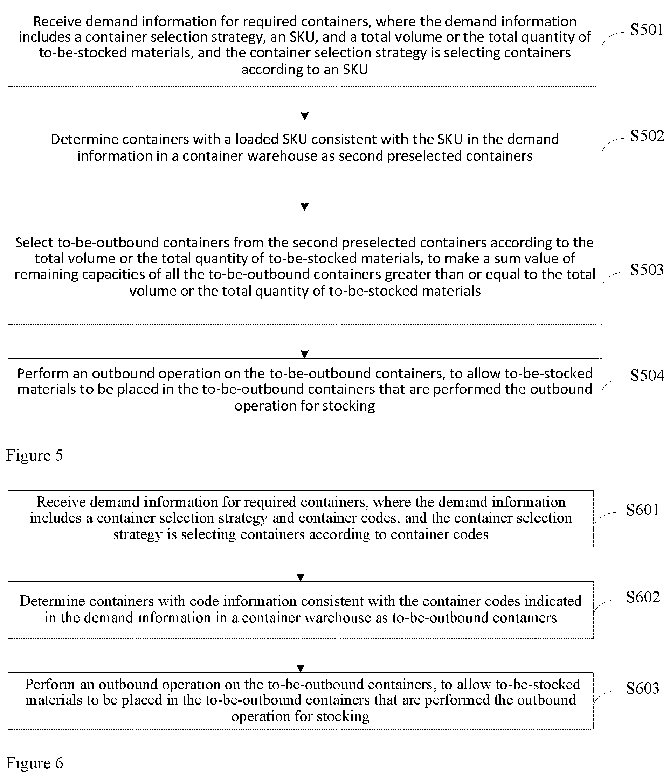

FIG. 5 is yet another schematic flowchart of a method for determining to-be-outbound containers according to the present disclosure. The method is applied to a control device. The control device may be a server. As shown in FIG. 5, the method includes the following steps.

S501: Receive demand information for required containers, where the demand information includes a container selection strategy, an SKU, and a total volume or the total quantity of to-be-stocked materials, and the container selection strategy is selecting containers according to an SKU.

For example, the container selection strategy is selecting containers according to an SKU; the SKU is red high-heeled shoes; and the total volume of to-be-stocked materials is A.

S502: Determine containers with a loaded SKU consistent with the SKU in the demand information in a container warehouse as second preselected containers.

The second preselected containers may have remaining capacities or may have no remaining capacity.

For example, assuming that the SKU in the obtained demand information is red high-heeled shoes, containers loaded with red high-heeled shoes in the container warehouse are determined as the second preselected containers.

S503: Select to-be-outbound containers from the second preselected containers according to the total volume or the total quantity of to-be-stocked materials, to make a sum value of remaining capacities of all the to-be-outbound containers greater than or equal to the total volume or the total quantity of to-be-stocked materials.

The remaining capacity may be a remaining volume of materials that can be accommodated in a container, or may be the remaining quantity of materials that can be accommodated.

In a possible implementation, the selecting to-be-outbound containers from the second preselected containers according to the total volume or the total quantity of to-be-stocked materials, to make a sum value of remaining capacities of all the to-be-outbound containers greater than or equal to the total volume or the total quantity of to-be-stocked materials includes: acquiring remaining capacities of the second preselected containers, performing sequential addition according to an ascending order or a descending order of the remaining capacities, and if an obtained sum value is less than the total volume or the total quantity of to-be-stocked materials when the addition reaches an N^{th} container and the obtained sum value is greater than or equal to the total volume or the total quantity of to-be-stocked materials when the addition reaches an (N+1)^{th} container, determining the first container to the (N+1)^{th} container as the to-be-outbound containers.

Optionally, the method further includes: if a sum value of remaining capacities of all the second preselected containers is less than the total volume of to-be-stocked materials or the total quantity of to-be-stocked materials, acquiring a historical packing record corresponding to the SKU indicated in the demand information; determining a container type of containers with the largest use count of the SKU in the historical packing record as a container type of the to-be-outbound containers; and determining to-be-outbound containers according to the container type of the to-be-outbound containers, the sum value of remaining capacities of the second preselected containers, and the total quantity of to-be-stocked materials indicated in the demand information.

Specifically, if the sum value of remaining capacities of all the second preselected containers is less than the total volume of to-be-stocked materials or the total quantity of to-be-stocked materials, that is, an obtained sum value is less than the total volume or the total quantity of to-be-stocked materials when the addition reaches the last container, it indicates that remaining capacities corresponding to containers loaded with the corresponding SKU in the demand information in the container warehouse cannot meet a demand. In this case, at least one empty container may be determined as a to-be-outbound container, and the at least one empty container is used for loading the remaining to-be-stocked materials. Alternatively, the historical packing record corresponding to the required SKU may be acquired, and a container type with the largest count of placing the SKU in the historical packing record is determined. For example, in the historical packing record, the SKU is stored in an 8-compartment container four times and is stored in a 4-compartment container twice. In this case, the container type of the to-be-outbound containers is determined as an 8-compartment container.

Optionally, if the obtained sum value is less than the total volume or the total quantity of to-be-stocked materials when the addition reaches the last container, or, if a record of the SKU does not exist in the historical packing record, the container type of the to-be-outbound containers may be determined according to the SKU in the demand information and prestored feature information of a plurality of containers.

For example, the container type of the to-be-outbound containers is determined according to a volume of an SKU, prestored compartment volumes of a plurality of containers, and a container type. In another example, the container type of the to-be-outbound containers is determined according to a type of an SKU, prestored types of SKUs to which a plurality of containers are applicable, and a container type.

Optionally, if the obtained sum value is less than the total volume or the total quantity of to-be-stocked materials when the addition reaches the last container, or, if a record of the SKU does not exist in the historical packing record, the container type of the to-be-outbound containers may be determined according to distances between containers and outbound points and/or the quantity of compartments of containers.

For example, a container type with the largest quantity of compartments is determined as a target container type, and a completely empty container of the target container type is determined as a first container, or, a container closest to an outbound point is used as a first container, or, a container closest to an outbound point and having the largest quantity of compartments is used as a first container, and an outbound operation is performed on the first container. If a confirmation message is received, a capacity of the first container is acquired, and the quantity N of required containers is determined according to the capacity of the first container and the total volume or the total quantity of to-be-stocked materials, and N first containers are determined as the to-be-outbound containers, to make a total capacity of N+1 first containers greater than or equal to the total volume or the total quantity of to-be-stocked materials. If a confirmation message is not received, a container type with the second largest quantity of compartments to the target container type is determined as a new target container type, or a container that is the second closest to the outbound point to the first container and has the quantity of compartments different from that of the first container as a new first container, or a container that has the second largest quantity of compartments to the first container and is closest to the outbound point is determined as a new first container, and the foregoing actions are performed again, until a confirmation message is received.

Specifically, after the first containers are outputted, if finding that the container compartment cannot accommodate the SKU, a sorting person does not send a confirmation message, and if finding that the container compartment can accommodate the SKU, sends a confirmation message.

Optionally, if a record of the SKU does not exist in the historical packing record, a compartment type may be determined according to the SKU, and a volume of a single compartment of the determined compartment type should be greater than or equal to a volume corresponding to the SKU, that is, a minimum volume of to-be-stocked materials.

Optionally, if a record of the SKU does not exist in the historical packing record, a container of any type may be outputted, and a sorting person manually adjusts a compartment type of the container according to an actual demand.

Optionally, the selecting to-be-outbound containers from the second preselected containers according to the total quantity of to-be-stocked materials may be determining, according to the total quantity of to-be-stocked materials, a total volume corresponding to to-be-stocked materials, and then selecting the to-be-outbound containers from the second preselected containers according to the total volume. For a corresponding specific implementation process, refer to the foregoing content. Details are not described.

Optionally, the selecting to-be-outbound containers from the second preselected containers according to the total volume or the total quantity of to-be-stocked materials includes: acquiring distances between the second preselected containers and corresponding outbound points; and selecting the to-be-outbound containers from the second preselected containers according to the total volume or the total quantity of to-be-stocked materials and the distances between the second preselected containers and the corresponding outbound points.

For example, the to-be-outbound containers are determined from the second preselected containers according to an ascending order of distances between the second preselected containers and the corresponding outbound points.

Through the method, the outbound efficiency of containers can be improved, a balance between warehousing states of the outbound points can be further reached, and warehousing management is optimized.

S504: Perform an outbound operation on the to-be-outbound containers, to allow to-be-stocked materials to be placed in the to-be-outbound containers that are performed the outbound operation for stocking.

S504 has the same or corresponding technical features as S103. For detailed description, refer to S103. Details are not described.

For the method for determining to-be-outbound containers provided in the present disclosure, based on the foregoing embodiments, when a container selection strategy entered by a user is selecting containers according to an SKU, SKU clustering can be implemented, and materials of a same type are placed together, thereby reducing the difficulty of warehouse management, and improving the efficiency of warehouse management. Further, to-be-outbound containers are determined according to an ascending order of remaining capacities, so that containers with small remaining capacities can be cleared in time, thereby improving container utilization. To-be-outbound containers are determined according to a descending order of remaining capacities, so that the stocking efficiency of to-be-stocked materials can be improved.

FIG. 6 is yet another schematic flowchart of a method for determining to-be-outbound containers according to the present disclosure. The method is applied to a control device. The control device may be a server. As shown in FIG. 6, the method includes the following steps.

S601: Receive demand information for required containers, where the demand information includes a container selection strategy and container codes, and the container selection strategy is selecting containers according to container codes.

For example, the container selection strategy is selecting containers according to container codes; and a container code is 001.

S602: Determine containers with code information consistent with the container codes indicated in the demand information in a container warehouse as to-be-outbound containers.

S603: Perform an outbound operation on the to-be-outbound containers, to allow to-be-stocked materials to be placed in the to-be-outbound containers that are performed the outbound operation for stocking.

S603 has the same or corresponding technical features as S103. For detailed description, refer to S103. Details are not described.

For the method for determining to-be-outbound containers provided in the present disclosure, based on the foregoing embodiments, when a container selection strategy entered by a user is selecting containers according to container codes, so that to-be-outbound containers can be accurately positioned according to container codes entered by the user, thereby meeting user demands, and improving user experience.

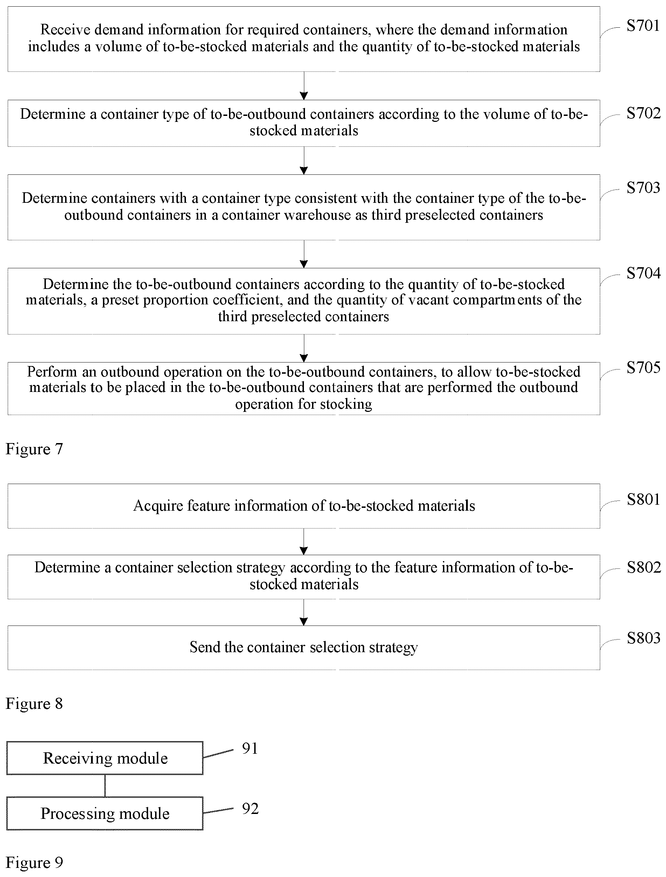

FIG. 7 is yet another schematic flowchart of a method for determining to-be-outbound containers according to the present disclosure. The method is applied to a control device. The control device may be a server. As shown in FIG. 7, the method includes the following steps.

S701: Receive demand information for required containers, where the demand information includes a volume of to-be-stocked materials and the total quantity of to-be-stocked materials.

S702: Determine a container type of to-be-outbound containers according to the volume of to-be-stocked materials.

Optionally, when the demand information includes a type of to-be-stocked materials, the container type of the to-be-outbound containers may be determined according to the type of to-be-stocked materials.

One compartment of a to-be-outbound container should be able to accommodate at least one to-be-stocked material.

S703: Determine containers with a container type consistent with the container type of the to-be-outbound containers in a container warehouse as third preselected containers.

S704: Determine the to-be-outbound containers according to the total quantity of to-be-stocked materials, a preset proportion coefficient, and the quantity of vacant compartments of the third preselected containers.

The to-be-outbound containers may include completely empty containers and non-completely empty containers, and the preset proportion coefficient is used for representing a proportion relationship between the completely empty containers and the non-completely empty containers in the to-be-outbound containers. For example, the to-be-outbound containers may include 80% of completely empty containers and 20% of non-completely empty containers.

The quantity of remaining empty compartments of non-completely empty containers may be the same or may be different.

Optionally, the non-completely empty containers may be containers that are loaded with materials the same as or related to to-be-stocked materials and have an empty compartment.

Optionally, the to-be-outbound containers may be further determined in combination with distances between containers and corresponding outbound points.

Continuing to refer to the foregoing examples, assuming that the quantity of to-be-outbound containers is 10, and 80% of completely empty containers and 20% of non-completely empty containers are included, that is, eight completely empty containers and two non-completely empty containers are included, distances between the third preselected containers and corresponding outbound points may further be acquired, and eight completely empty containers and two non-completely empty containers are respectively selected according to an ascending order of distances between the completely empty containers and the non-completely empty containers and corresponding outbound points.

Through the method, the outbound efficiency of containers can be improved, a balance between warehousing states of the outbound points can be further reached, and warehousing management is optimized.

Optionally, the to-be-outbound containers may be determined according to the volume of to-be-stocked materials, a preset proportion coefficient, and the quantity of vacant compartments of the third preselected containers.

A volume of to-be-stocked materials that can be accommodated in one compartment of the third preselected containers is fixed. Therefore, conversion may be performed first. For example, the quantity of compartments required for complete loading of to-be-stocked materials is determined according to the volume of to-be-stocked materials and the volume of to-be-stocked materials that can be accommodated in one compartment of the third preselected containers, so that the quantity of required to-be-outbound containers is obtained.

S705: Perform an outbound operation on the to-be-outbound containers, to allow to-be-stocked materials to be placed in the to-be-outbound containers that are performed the outbound operation for stocking.

For example, when the to-be-outbound containers are sequentially outputted, completely empty containers may be outputted first, and then non-completely empty containers are outputted.

Optionally, during the outbound of the non-completely empty container, materials in the container are locked, that is, the materials in the container are in an unavailable state. If an outbound order needs to use a corresponding material, the material is outbound from another container. If the material does not exist in any other container, this order is first suspended. The reason of suspending the order is that the container is moved out. Normal processing of the suspended order is restored only when the container is stocked again and the material is unfrozen.

S705 has the same or corresponding technical features as S103. For detailed description, refer to S103. Details are not described.

For the method for determining to-be-outbound containers provided in the present disclosure, When demand information entered by a user includes a volume of to-be-stocked materials and the total quantity of to-be-stocked materials, a container type of to-be-outbound containers is determined according to the volume of to-be-stocked materials; containers with a container type consistent with the container type of the to-be-outbound containers in a container warehouse are determined as third preselected containers; and the to-be-outbound containers are determined according to the total quantity of to-be-stocked materials, a preset proportion coefficient, and the quantity of vacant compartments of the third preselected containers. In this way, both the stocking efficiency and the container utilization can be ensured, thereby optimizing a warehousing system.

FIG. 8 is yet another schematic flowchart of a method for determining to-be-outbound containers according to the present disclosure. The method is applied to a control device. The control device may be a server. As shown in FIG. 8, the method includes the following steps.

S801: Acquire feature information of to-be-stocked materials.

The feature information of to-be-stocked materials includes at least one piece of the following information: the quantity of to-be-stocked materials and an SKU.

S802: Determine a container selection strategy according to the feature information of to-be-stocked materials.

Optionally, the feature information of to-be-stocked materials includes the quantity of to-be-stocked materials, and the determining a container selection strategy according to the feature information of to-be-stocked materials includes: if the quantity of to-be-stocked materials is greater than or equal to a first preset threshold, determining that the container selection strategy is selecting completely empty containers.

Through the method, the to-be-outbound containers can be quickly determined, thereby improving the efficiency of determining containers, and improving the outbound efficiency of containers, and correspondingly the stocking efficiency of materials can be further improved.

Optionally, if the quantity of to-be-stocked materials is less than the first preset threshold, it is determined that the container selection strategy is selecting containers according to the quantity of empty compartments in a container.

Through the method, containers can be accurately selected, thereby improving container utilization.

Optionally, if the feature information of to-be-stocked materials includes an SKU and the quantity of to-be-stocked materials and the quantity of to-be-stocked materials is greater than a second preset threshold, the container selection strategy is selecting containers according to an SKU.

Optionally, the second preset threshold may be set to a large value.

Through the method, when to-be-stocked materials are a large number of materials of a single type, the container selection strategy for selecting containers according to an SKU is used, and same SKUs can be placed together, thereby optimizing warehouse management.

Optionally, if the feature information of to-be-stocked materials includes an SKU, the container selection strategy is selecting containers according to container codes.

Through the method, the clustering of associated commodities can be implemented.

S803: Send the container selection strategy.

For the method for determining to-be-outbound containers provided in the present disclosure, feature information of to-be-stocked materials is acquired, and a container selection strategy is determined and outbound according to the feature information of to-be-stocked materials. Send container selection strategies can be determined according to features of to-be- stocked materials. Different demands for different materials for stocking are met, thereby improving the accuracy of container outbound, and further improving the appropriateness of warehousing.

FIG. 9 is a schematic structural diagram of an apparatus for determining to-be-outbound containers according to the present disclosure. As shown in FIG. 9, the apparatus includes:
a receiving module 91, configured to receive demand information for required containers, where the demand information includes one or more pieces of the following information: a container selection strategy, a container type, the quantity of containers, the quantity of empty compartments in a container, a total volume of to-be-stocked materials, the total quantity of to-be-stocked materials, container codes, and an SKU; and
a processing module 92, configured to determine to-be-outbound containers according to the demand information for required containers, where
the processing module 92 is further configured to perform an outbound operation on the to-be-outbound containers, to allow to-be-stocked materials to be placed in the to-be-outbound containers that are performed the outbound operation for stocking.

Optionally, the demand information includes a container selection strategy, a container type, and the quantity of containers the container selection strategy is selecting completely empty containers, and the processing module 92 is specifically configured to determine, from a container warehouse according to the quantity of containers indicated in the demand information, completely empty containers matching the container type indicated in the demand information as the to-be-outbound containers.

Optionally, the processing module 92 is specifically configured to: use the completely empty containers matching the container type indicated in the demand information in the container warehouse as preliminary to-be-outbound containers; acquire distances between the preliminary to-be-outbound containers and corresponding outbound points; and select, from the preliminary to-be-outbound containers according to the distances and the quantity of containers, containers corresponding to the quantity of containers as the to-be-outbound containers.

Optionally, the demand information includes a container selection strategy, a container type, and the quantity of empty compartments in a container, the container selection strategy is selecting containers according to the quantity of empty compartments in a container, and the processing module 92 is specifically configured to: determine containers with a container type matching the container type in the demand information and having empty compartments in a container warehouse as first preselected containers; and determine the to-be-outbound containers from the first preselected containers according to the quantity of empty compartments in a container in the demand information, to make a total sum of the quantity of empty compartments in all the to-be-outbound containers greater than or equal to the quantity of empty compartments in a container in the demand information.

Optionally, the processing module 92 is specifically configured to: perform sequential addition according to an ascending order or a descending order of the quantity of empty compartments in the first preselected containers; and if an obtained sum value of the quantity of empty compartments is less than the quantity of empty compartments in a container in the demand information when the addition reaches an N^{th} container and the obtained sum value is greater than or equal to the quantity of empty compartments in a container in the demand information when the addition reaches an (N+1)^{th} container, determine the first container to the (N+1)^{th} container as the to-be-outbound containers.

Optionally, the demand information includes a container selection strategy, a stock keeping unit (SKU), and a total volume of to-be-stocked materials or the total quantity of to-be-stocked materials, the container selection strategy is selecting containers according to an SKU, and the processing module 92 is specifically configured to: determine containers with a loaded SKU consistent with the SKU in the demand information in a container warehouse as second preselected containers; and select the to-be-outbound containers from the second preselected containers according to the total volume or the total quantity of to-be-stocked materials, to make a sum value of remaining capacities of all the to-be-outbound containers greater than or equal to the total volume of to-be-stocked materials or the total quantity of to-be-stocked materials.

Optionally, the processing module 92 is specifically configured to: acquire remaining capacities of the second preselected containers, perform sequential addition according to an ascending order or a descending order of the remaining capacities, and if an obtained sum value is less than the total volume of to-be-stocked materials or the total quantity of to-be-stocked materials when the addition reaches an N^{th} container and the obtained sum value is greater than or equal to the total volume of to-be-stocked materials or the total quantity of to-be-stocked materials when the addition reaches an (N+1)^{th} container, determine the first container to the (N+1)^{th} container as the to-be-outbound containers.

Optionally, the processing module 92 is further configured to: if a sum value of remaining capacities of all the second preselected containers is less than the total volume of to-be-stocked materials or the total quantity of to-be-stocked materials, determine whether a historical packing record corresponding to the SKU indicated in the demand information can be acquired; if the historical packing record can be acquired, determine a container type of containers with the largest use count in the historical packing record as a container type of the to-be-outbound containers; and determine the to-be-outbound containers according to the container type of the to-be-outbound containers, the sum value of remaining capacities of the second preselected containers, and the total volume of to-be-stocked materials or the total quantity of to-be-stocked materials indicated in the demand information.

Optionally, the processing module 92 is specifically configured to: determine a capacity difference value according to the sum value of remaining capacities of the second preselected containers and the total volume or the total quantity of to-be-stocked materials indicated in the demand information; select at least one completely empty container corresponding to the container type of the to-be-outbound containers, to make a total capacity of the completely empty container corresponding to the container type of the to-be-outbound containers greater than or equal to the capacity difference value; and determine the second preselected containers and the at least one completely empty container corresponding to the container type of the to-be-outbound containers as the to-be-outbound containers.

Optionally, the processing module 92 is specifically configured to: determine containers with code information consistent with the container codes indicated in the demand information in a container warehouse as the to-be-outbound containers.

Optionally, the processing module 92 is specifically configured to: determine a container type of the to-be-outbound containers according to the volume of to-be-stocked materials; determine containers with a container type consistent with the container type of the to-be-outbound containers in a container warehouse as third preselected containers; and determine the to-be-outbound containers according to the total quantity of to-be-stocked materials, a preset proportion coefficient, and the quantity of vacant compartments of the third preselected containers.

Optionally, the processing module 92 is specifically configured to determine to-be-outbound containers according to the demand information for required containers and position information of the outbound points.

The apparatus for determining to-be-outbound containers may perform the foregoing method for determining to-be-outbound containers. For the content and effect of the apparatus, refer to the method embodiment part. Details are not described again.

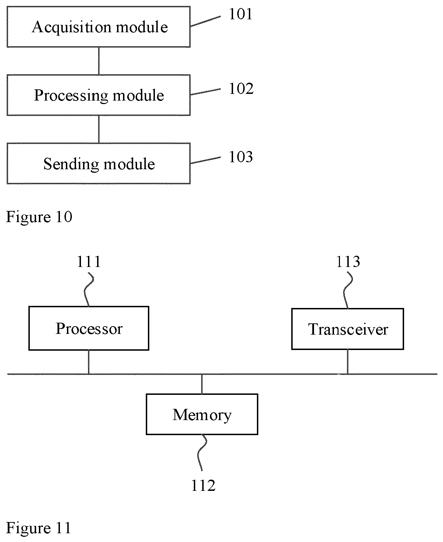

FIG. 10 is another schematic structural diagram of an apparatus for determining to-be-outbound containers according to the present disclosure. As shown in FIG. 10, the apparatus includes:
an acquisition module 101, configured to acquire feature information of to-be-stocked materials, where the feature information of to-be-stocked materials includes at least one piece of the following information: the quantity of to-be-stocked materials and an SKU;
a processing module 102, configured to determine a container selection strategy according to the feature information of to-be-stocked materials; and
a sending module 103, configured to send the container selection strategy.

Optionally, the feature information of to-be-stocked materials includes the quantity of to-be-stocked materials, and the processing module 102 is specifically configured to: if the quantity of to-be-stocked materials is greater than a first preset threshold, determine that the container selection strategy is selecting completely empty containers.

Optionally, if the feature information of to-be-stocked materials includes an SKU and the quantity of to-be-stocked materials and the quantity of to-be-stocked materials is greater than a second preset threshold, the container selection strategy is selecting containers according to an SKU.

Optionally, if the feature information of to-be-stocked materials includes an SKU, the container selection strategy is selecting containers according to container codes.

The apparatus for determining to-be-outbound containers may perform the foregoing method for determining to-be-outbound containers. For the content and effect of the apparatus, refer to the method embodiment part. Details are not described again.

FIG. 11 is a schematic structural diagram of a control device according to the present disclosure. As shown in FIG. 11, the control device of this embodiment includes: a processor 111 and a memory 112. The processor 111 is communicatively connected to the memory 112. The memory 112 is configured to store a computer program. The processor 111 is configured to invoke the computer program stored in the memory 112, to implement the methods in the foregoing embodiments.

Optionally, the control device further includes a transceiver 113, configured to implement communication with another device.

The control device may perform the foregoing methods for determining to-be-outbound containers provided in corresponding embodiments. For the content and effect of the apparatus, refer to the method embodiment part. Details are not described again.

The present disclosure further provides a computer-readable storage medium. The computer-readable storage medium stores computer-executable instructions, and the computer-executable instructions, when being executed by a processor, implement the foregoing method in any method embodiment.

The computer-executable instructions stored in the computer-readable storage medium, when being executed by the processor, can implement the foregoing method for determining to-be-outbound containers. For the content and effect of the apparatus, refer to the method embodiment part. Details are not described again.

The present disclosure further provides a computer program product, including a computer program/instructions, where the computer program/instructions, when being executed by a processor, implement the foregoing method in any method embodiment.

The computer-executable instructions stored in the computer-readable storage medium, when being executed by the processor, can implement the foregoing method for determining to-be-outbound containers. For the content and effect of the apparatus, refer to the method embodiment part. Details are not described again.

Finally, it should be noted that the foregoing embodiments are merely used for describing the technical solutions of the present disclosure, but are not intended to limit the present disclosure. Although the present disclosure is described in detail with reference to the foregoing embodiments, it should be appreciated by a person skilled in the art that, modifications may still be made to the technical solutions recorded in the foregoing embodiments, or equivalent replacements may be made to the part of all of the technical features; and these modifications or replacements will not cause the essence of corresponding technical solutions to depart from the scope of the technical solutions in the embodiments of the present disclosure.

## Claims

1. A method for determining to-be-outbound containers, applied to a control device, comprising:
receiving (S101, S301, S401, S501, S601, S701) demand information for required containers, wherein the demand information comprises one or more pieces of the following information: a container selection strategy, a container type, the quantity of containers, the quantity of empty compartments in a container, a total volume of to-be-stocked materials, the total quantity of to-be-stocked materials, container codes, and a stock keeping unit (SKU);
determining (S102) to-be-outbound containers according to the demand information for required containers; and
performing (S103, S303, S404, S504, S603, S705) an outbound operation on the to-be-outbound containers, to allow to-be-stocked materials to be placed in the to-be-outbound containers that are performed the outbound operation for stocking;
wherein the demand information comprises the container selection strategy, the container type, and the quantity of empty compartments in a container, the container selection strategy is selecting containers according to the quantity of empty compartments in a container, and the determining (S102) to-be-outbound containers according to the demand information for required containers comprises:
determining (S402) containers with a container type matching the container type in the demand information and having empty compartments in a container warehouse as first preselected containers; and
determining (S403) the to-be-outbound containers from the first preselected containers according to the quantity of empty compartments in a container in the demand information, to make a total sum of the quantity of empty compartments in all the to-be-outbound containers greater than or equal to the quantity of empty compartments in a container in the demand information;
wherein the determining (S403) the to-be-outbound containers from the first preselected containers according to the quantity of empty compartments in a container in the demand information comprises:
performing sequential addition according to an ascending order or a descending order of the quantity of empty compartments in the first preselected containers; and
if an obtained sum value of the quantity of empty compartments is less than the quantity of empty compartments in a container in the demand information when the addition reaches an N^{th} container and the obtained sum value is greater than or equal to the quantity of empty compartments in a container in the demand information when the addition reaches an (N+1)^{th} container, determining a first container to the (N+1)^{th} container as the to-be-outbound containers.

2. The method according to claim 1, wherein the demand information comprises the container selection strategy, the container type, and the quantity of containers, the container selection strategy is selecting completely empty containers, and the determining (S102) to-be-outbound containers according to the demand information for required containers comprises:
determining (S302), from a container warehouse according to the quantity of containers indicated in the demand information, completely empty containers matching the container type indicated in the demand information as the to-be-outbound containers.

3. The method according to claim 2, wherein the determining (S302), from a container warehouse according to the quantity of containers indicated in the demand information, completely empty containers matching the container type indicated in the demand information as the to-be-outbound containers comprises:
Using the completely empty containers matching the container type indicated in the demand information in the container warehouse as preliminary to-be-outbound containers;
acquiring distances between the preliminary to-be-outbound containers and corresponding outbound points; and
selecting, from the preliminary to-be-outbound containers according to the distances and the quantity of containers, containers corresponding to the quantity of containers as the to-be-outbound containers.

4. The method according to claim 1, wherein the demand information comprises the container selection strategy, the SKU, and the total volume of to-be-stocked materials or the total quantity of to-be-stocked materials, the container selection strategy is selecting containers according to the SKU, and the determining (S102) to-be-outbound containers according to the demand information for required containers comprises:
determining (S502) containers with a loaded SKU consistent with the SKU in the demand information in a container warehouse as second preselected containers; and
selecting (S503) the to-be-outbound containers from the second preselected containers according to the total volume or the total quantity of to-be-stocked materials, to make a sum value of remaining capacities of all the to-be-outbound containers greater than or equal to the total volume of to-be-stocked materials or the total quantity of to-be-stocked materials.

5. The method according to claim 4, wherein the selecting (S503) the to-be-outbound containers from the second preselected containers according to the total volume or the total quantity of to-be-stocked materials, to make a sum value of remaining capacities of all the to-be-outbound containers greater than or equal to the total volume of to-be-stocked materials or the total quantity of to-be-stocked materials comprises:
acquiring remaining capacities of the second preselected containers, performing sequential addition according to an ascending order or a descending order of the remaining capacities, and if an obtained sum value is less than the total volume of to-be-stocked materials or the total quantity of to-be-stocked materials when the addition reaches an N^{th} container and the obtained sum value is greater than or equal to the total volume of to-be-stocked materials or the total quantity of to-be-stocked materials when the addition reaches an (N+1)^{th} container, determining a first container to the (N+1)^{th} container as the to-be-outbound containers.

6. The method according to claim 4, wherein the method further comprises:
if a sum value of remaining capacities of all the second preselected containers is less than the total volume of to-be-stocked materials or the total quantity of to-be-stocked materials, acquiring a historical packing record corresponding to the SKU indicated in the demand information;
determining a container type of containers with the largest use count in the historical packing record as a container type of the to-be-outbound containers; and
determining the to-be-outbound containers according to the container type of the to-be-outbound containers, the sum value of remaining capacities of the second preselected containers, and the total volume of to-be-stocked materials or the total quantity of to-be-stocked materials indicated in the demand information.

7. The method according to claim 6, wherein the determining the to-be-outbound containers according to the container type of the to-be-outbound containers, the sum value of remaining capacities of the second preselected containers, and the total volume of to-be-stocked materials or the total quantity of to-be-stocked materials indicated in the demand information comprises:
determining a capacity difference value according to the sum value of remaining capacities of the second preselected containers and the total volume or the total quantity of to-be-stocked materials indicated in the demand information;
selecting at least one completely empty container corresponding to the container type of the to-be-outbound containers, to make a total capacity of the completely empty container corresponding to the container type of the to-be-outbound containers greater than or equal to the capacity difference value; and
determining the second preselected containers and the at least one completely empty container corresponding to the container type of the to-be-outbound containers as the to-be-outbound containers.

8. The method according to claim 1, wherein the demand information comprises the container selection strategy and the container codes, the container selection strategy is selecting containers according to the container codes, and the determining (S102) to-be-outbound containers according to the demand information for required containers comprises:
determining (S602) containers with code information consistent with the container codes indicated in the demand information in a container warehouse as the to-be-outbound containers.

9. The method according to claim 1, wherein the demand information comprises a volume of to-be-stocked materials and the total quantity of to-be-stocked materials, and the determining (S102) to-be-outbound containers according to the demand information for required containers comprises:
determining (S702) a container type of the to-be-outbound containers according to the volume of to-be-stocked materials;
determining (S703) containers with a container type consistent with the container type of the to-be-outbound containers in a container warehouse as third preselected containers; and
determining (S704) the to-be-outbound containers according to the total quantity of to-be-stocked materials, a preset proportion coefficient, and the quantity of vacant compartments of the third preselected containers.

10. An apparatus for determining to-be-outbound containers, comprising:
a receiving module (91), configured to receive demand information for required containers, wherein the demand information comprises one or more pieces of the following information: a container selection strategy, a container type, the quantity of containers, the quantity of empty compartments in a container, a total volume of to-be-stocked materials, the total quantity of to-be-stocked materials, container codes, and an SKU; and
a processing module (92), configured to determine to-be-outbound containers according to the demand information for required containers, wherein
the processing module (92) is further configured to perform an outbound operation on the to-be-outbound containers, to allow to-be-stocked materials to be placed in the to-be-outbound containers that are performed the outbound operation for stocking;
wherein the demand information comprises the container selection strategy, the container type, and the quantity of empty compartments in a container, the container selection strategy is selecting containers according to the quantity of empty compartments in a container;
wherein when the processing module (92) is configured to determine to-be-outbound containers according to the demand information for required containers, the processing module (92) is configured to:
determine containers with a container type matching the container type in the demand information and having empty compartments in a container warehouse as first preselected containers; and
determine the to-be-outbound containers from the first preselected containers according to the quantity of empty compartments in a container in the demand information, to make a total sum of the quantity of empty compartments in all the to-be-outbound containers greater than or equal to the quantity of empty compartments in a container in the demand information;
when the processing module (92) is configured to determine the to-be-outbound containers from the first preselected containers according to the quantity of empty compartments in a container in the demand information, the processing module (92) is configured to:
perform sequential addition according to an ascending order or a descending order of the quantity of empty compartments in the first preselected containers; and
if an obtained sum value of the quantity of empty compartments is less than the quantity of empty compartments in a container in the demand information when the addition reaches an N^{th} container and the obtained sum value is greater than or equal to the quantity of empty compartments in a container in the demand information when the addition reaches an (N+1)^{th} container, determine a first container to the (N+1)^{th} container as the to-be-outbound containers.

11. A computer-readable storage medium, wherein the computer-readable storage medium is configured to store computer-executable instructions, and a processor, when executing the computer-executable instructions, implements the method according to any one of claims 1 to 9.

## Patentansprüche

1. Verfahren zum Bestimmen auszulagernder Behälter, angewendet auf eine Steuervorrichtung, umfassend:
Empfangen (S101, S301, S401, S501, S601, S701) von Bedarfsinformation für erforderliche Behälter, wobei die Bedarfsinformation ein oder mehrere Teile der folgenden Information umfasst:
eine Behälterauswahlstrategie, einen Behältertyp, die Anzahl von Behältern, die Anzahl leerer Fächer in einem Behälter, ein Gesamtvolumen einzulagernder Materialien, die Gesamtanzahl einzulagernder Materialien, Behältercodes und eine Lagereinheit, SKU (stock keeping unit);
Bestimmen (S102) auszulagernder Behälter gemäß der Bedarfsinformation für erforderliche Behälter; und
Durchführen (S103, S303, S404, S504, S603, S705) eines Auslagerungsvorgangs an den auszulagernden Behältern, um zu ermöglichen, dass einzulagernde Materialien in den auszulagernden Behältern, die den Auslagerungsvorgang durchgeführt haben, zur Einlagerung platziert werden;
wobei die Bedarfsinformation die Behälterauswahlstrategie, den Behältertyp und die Anzahl leerer Fächer in einem Behälter umfasst, die Behälterauswahlstrategie Auswählen von Behältern gemäß der Anzahl leerer Fächer in einem Behälter ist, und das Bestimmen (S102) auszulagernder Behälter gemäß der Bedarfsinformation für erforderliche Behälter umfasst:
Bestimmen (S402) von Behältern mit einem Behältertyp, der mit dem Behältertyp in der Bedarfsinformation übereinstimmt, und die leere Fächer in einem Behälterlager aufweisen, als erste vorausgewählte Behälter; und
Bestimmen (S403) der auszulagernden Behälter aus den ersten vorausgewählten Behältern gemäß der Anzahl leerer Fächer in einem Behälter in der Bedarfsinformation, um eine Gesamtsumme der Anzahl leerer Fächer in allen auszulagernden Behältern größer als oder gleich der Anzahl leerer Fächer in einem Behälter in der Bedarfsinformation zu machen;
wobei das Bestimmen (S403) der auszulagernden Behälter aus den ersten vorausgewählten Behältern gemäß der Anzahl leerer Fächer in einem Behälter in der Bedarfsinformation umfasst:
Durchführen sequentieller Addition gemäß einer aufsteigenden Reihenfolge oder einer absteigenden Reihenfolge der Anzahl leerer Fächer in den ersten vorausgewählten Behältern; und wenn ein erhaltener Summenwert der Anzahl leerer Fächer kleiner als die Anzahl leerer Fächer in einem Behälter in der Bedarfsinformation ist, wenn die Addition einen N-ten Behälter erreicht, und
der erhaltene Summenwert größer als oder gleich der Anzahl leerer Fächer in einem Behälter in der Bedarfsinformation ist, wenn die Addition einen (N+1)-ten Behälter erreicht, Bestimmen eines ersten Behälters bis zu dem (N+1)-ten Behälter als die auszulagernden Behälter.

2. Verfahren nach Anspruch 1, wobei die Bedarfsinformation die Behälterauswahlstrategie, den Behältertyp und die Anzahl von Behältern umfasst, die Behälterauswahlstrategie Auswählen vollständig leerer Behälter ist, und das Bestimmen (S102) auszulagernder Behälter gemäß der Bedarfsinformation für erforderliche Behälter umfasst:
Bestimmen (S302), aus einem Behälterlager gemäß der Anzahl von Behältern, die in der Bedarfsinformation angegeben ist, vollständig leerer Behälter, die mit dem Behältertyp übereinstimmen, der in der Bedarfsinformation angegeben ist, als die auszulagernden Behälter.

3. Verfahren nach Anspruch 2, wobei das Bestimmen (S302), aus einem Behälterlager gemäß der Anzahl von Behältern, die in der Bedarfsinformation angegeben ist, vollständig leerer Behälter, die mit dem Behältertyp übereinstimmen, der in der Bedarfsinformation angegeben ist, als die auszulagernden Behälter umfasst:
Verwenden der vollständig leeren Behälter, die mit dem Behältertyp übereinstimmen, der in der Bedarfsinformation angegeben ist, in dem Behälterlager als vorläufige auszulagernde Behälter;
Erfassen von Abständen zwischen den vorläufigen auszulagernden Behältern und entsprechenden Auslagerungspunkten; und
Auswählen, aus den vorläufigen auszulagernden Behältern gemäß den Abständen und der Anzahl von Behältern, von Behältern, die der Anzahl von Behältern entsprechen, als die auszulagernden Behälter.

4. Verfahren nach Anspruch 1, wobei die Bedarfsinformation die Behälterauswahlstrategie, die SKU und das Gesamtvolumen einzulagernder Materialien oder die Gesamtanzahl einzulagernder Materialien umfasst, die Behälterauswahlstrategie Auswählen von Behältern gemäß der SKU ist, und das Bestimmen (S102) auszulagernder Behälter gemäß der Bedarfsinformation für erforderliche Behälter umfasst:
Bestimmen (S502) von Behältern mit einer beladenen SKU, die mit der SKU in der Bedarfsinformation übereinstimmt, in einem Behälterlager als zweite vorausgewählte Behälter; und Auswählen (S503) der auszulagernden Behälter aus den zweiten vorausgewählten Behältern gemäß dem Gesamtvolumen oder der Gesamtanzahl einzulagernder Materialien, um einen Summenwert verbleibender Kapazitäten aller auszulagernden Behälter größer als oder gleich dem Gesamtvolumen einzulagernder Materialien oder der Gesamtanzahl einzulagernder Materialien zu machen.

5. Verfahren nach Anspruch 4, wobei das Auswählen (S503) der auszulagernden Behälter aus den zweiten vorausgewählten Behältern gemäß dem Gesamtvolumen oder der Gesamtanzahl einzulagernder Materialien, um einen Summenwert verbleibender Kapazitäten aller auszulagernden Behälter größer als oder gleich dem Gesamtvolumen einzulagernder Materialien oder der Gesamtanzahl einzulagernder Materialien zu machen, umfasst:
Erfassen verbleibender Kapazitäten der zweiten vorausgewählten Behälter, Durchführen sequentieller Addition gemäß einer aufsteigenden Reihenfolge oder einer absteigenden Reihenfolge der verbleibenden Kapazitäten, und wenn ein erhaltener Summenwert kleiner als das Gesamtvolumen einzulagernder Materialien oder die Gesamtanzahl einzulagernder Materialien ist, wenn die Addition einen N-ten Behälter erreicht, und der erhaltene Summenwert größer als oder gleich dem Gesamtvolumen einzulagernder Materialien oder der Gesamtanzahl einzulagernder Materialien ist, wenn die Addition einen (N+1)-ten Behälter erreicht, Bestimmen eines ersten Behälters bis zu dem (N+1)-ten Behälter als die auszulagernden Behälter.

6. Verfahren nach Anspruch 4, wobei das Verfahren ferner umfasst:
wenn ein Summenwert verbleibender Kapazitäten aller zweiten vorausgewählten Behälter kleiner als das Gesamtvolumen einzulagernder Materialien oder die Gesamtanzahl einzulagernder Materialien ist, Erfassen eines historischen Packdatensatzes, der der SKU entspricht, die in der Bedarfsinformation angegeben ist;
Bestimmen eines Behältertyps von Behältern mit der größten Verwendungsanzahl in dem historischen Packdatensatz als einen Behältertyp der auszulagernden Behälter; und
Bestimmen der auszulagernden Behälter gemäß dem Behältertyp der auszulagernden Behälter, dem Summenwert verbleibender Kapazitäten der zweiten vorausgewählten Behälter und dem Gesamtvolumen einzulagernder Materialien oder der Gesamtanzahl einzulagernder Materialien, die in der Bedarfsinformation angegeben ist.

7. Verfahren nach Anspruch 6, wobei das Bestimmen der auszulagernden Behälter gemäß dem Behältertyp der auszulagernden Behälter, dem Summenwert verbleibender Kapazitäten der zweiten vorausgewählten Behälter und dem Gesamtvolumen einzulagernder Materialien oder der Gesamtanzahl einzulagernder Materialien, die in der Bedarfsinformation angegeben ist, umfasst:
Bestimmen eines Kapazitätsdifferenzwerts gemäß dem Summenwert verbleibender Kapazitäten der zweiten vorausgewählten Behälter und dem Gesamtvolumen oder der Gesamtanzahl einzulagernder Materialien, die in der Bedarfsinformation angegeben ist;
Auswählen mindestens eines vollständig leeren Behälters, der dem Behältertyp der auszulagernden Behälter entspricht, um eine Gesamtkapazität des vollständig leeren Behälters,
der dem Behältertyp der auszulagernden Behälter entspricht, größer als oder gleich dem Kapazitätsdifferenzwert zu machen; und
Bestimmen der zweiten vorausgewählten Behälter und des mindestens einen vollständig leeren Behälters, der dem Behältertyp der auszulagernden Behälter entspricht, als die auszulagernden Behälter.

8. Verfahren nach Anspruch 1, wobei die Bedarfsinformation die Behälterauswahlstrategie und die Behältercodes umfasst, die Behälterauswahlstrategie Auswählen von Behältern gemäß den Behältercodes ist, und das Bestimmen (S102) auszulagernder Behälter gemäß der Bedarfsinformation für erforderliche Behälter umfasst:
Bestimmen (S602) von Behältern mit Codeinformation, die mit den Behältercodes übereinstimmt, die in der Bedarfsinformation angegeben sind, in einem Behälterlager als die auszulagernden Behälter.

9. Verfahren nach Anspruch 1, wobei die Bedarfsinformation ein Volumen einzulagernder Materialien und die Gesamtanzahl einzulagernder Materialien umfasst, und das Bestimmen (S102) auszulagernder Behälter gemäß der Bedarfsinformation für erforderliche Behälter umfasst:
Bestimmen (S702) eines Behältertyps der auszulagernden Behälter gemäß dem Volumen einzulagernder Materialien;
Bestimmen (S703) von Behältern mit einem Behältertyp, der mit dem Behältertyp der auszulagernden Behälter übereinstimmt, in einem Behälterlager als dritte vorausgewählte Behälter; und
Bestimmen (S704) der auszulagernden Behälter gemäß der Gesamtanzahl einzulagernder Materialien, einem voreingestellten Proportionskoeffizienten und der Anzahl freier Fächer der dritten vorausgewählten Behälter.

10. Vorrichtung zum Bestimmen auszulagernder Behälter, umfassend:
ein Empfangsmodul (91), konfiguriert zum Empfangen von Bedarfsinformation für erforderliche Behälter, wobei die Bedarfsinformation ein oder mehrere Teile der folgenden Information umfasst:
eine Behälterauswahlstrategie, einen Behältertyp, die Anzahl von Behältern, die Anzahl leerer Fächer in einem Behälter, ein Gesamtvolumen einzulagernder Materialien, die Gesamtanzahl einzulagernder Materialien, Behältercodes und eine SKU; und
ein Verarbeitungsmodul (92), konfiguriert zum Bestimmen auszulagernder Behälter gemäß der Bedarfsinformation für erforderliche Behälter, wobei
das Verarbeitungsmodul (92) ferner konfiguriert ist zum Durchführen eines Auslagerungsvorgangs an den auszulagernden Behältern, um zu ermöglichen, dass einzulagernde Materialien in den auszulagernden Behältern, die den Auslagerungsvorgang durchgeführt haben, zur Einlagerung platziert werden;
wobei die Bedarfsinformation die Behälterauswahlstrategie, den Behältertyp und die Anzahl leerer Fächer in einem Behälter umfasst, die Behälterauswahlstrategie Auswählen von Behältern gemäß der Anzahl leerer Fächer in einem Behälter ist;
wobei, wenn das Verarbeitungsmodul (92) konfiguriert ist zum Bestimmen auszulagernder Behälter gemäß der Bedarfsinformation für erforderliche Behälter, das Verarbeitungsmodul (92) konfiguriert ist zum:
Bestimmen von Behältern mit einem Behältertyp, der mit dem Behältertyp in der Bedarfsinformation übereinstimmt, und die leere Fächer in einem Behälterlager aufweisen, als erste vorausgewählte Behälter; und
Bestimmen der auszulagernden Behälter aus den ersten vorausgewählten Behältern gemäß der Anzahl leerer Fächer in einem Behälter in der Bedarfsinformation, um eine Gesamtsumme der Anzahl leerer Fächer in allen auszulagernden Behältern größer als oder gleich der Anzahl leerer Fächer in einem Behälter in der Bedarfsinformation zu machen;
wenn das Verarbeitungsmodul (92) konfiguriert ist zum Bestimmen der auszulagernden Behälter aus den ersten vorausgewählten Behältern gemäß der Anzahl leerer Fächer in einem Behälter in der Bedarfsinformation, ist das Verarbeitungsmodul (92) konfiguriert zum:
Durchführen sequentieller Addition gemäß einer aufsteigenden Reihenfolge oder einer absteigenden Reihenfolge der Anzahl leerer Fächer in den ersten vorausgewählten Behältern; und
wenn ein erhaltener Summenwert der Anzahl leerer Fächer kleiner als die Anzahl leerer Fächer in einem Behälter in der Bedarfsinformation ist, wenn die Addition einen N-ten Behälter erreicht, und der erhaltene Summenwert größer als oder gleich der Anzahl leerer Fächer in einem Behälter in der Bedarfsinformation ist, wenn die Addition einen (N+1)-ten Behälter erreicht, Bestimmen eines ersten Behälters bis zu dem (N+1)-ten Behälter als die auszulagernden Behälter.

11. Computerlesbares Speichermedium, wobei das computerlesbare Speichermedium konfiguriert ist zum Speichern computerausführbarer Anweisungen, und ein Prozessor, wenn er die computerausführbaren Anweisungen ausführt, das Verfahren nach einem der Ansprüche 1 bis 9 implementiert.

## Revendications

1. Procédé de détermination de conteneurs devant être sortis, appliqué à un dispositif de commande, comprenant :
la réception (S101, S301, S401, S501, S601, S701) d'informations de demande pour des conteneurs requis, dans lequel les informations de demande comprennent une ou plusieurs des informations suivantes : une stratégie de sélection de conteneurs, un type de conteneur, la quantité de conteneurs, la quantité de compartiments vides dans un conteneur, un volume total de matériaux devant être stockés, la quantité totale de matériaux devant être stockés, des codes de conteneurs et une unité de gestion de stock, SKU (stock keeping unit) ;
la détermination (S102) de conteneurs devant être sortis en fonction des informations de demande pour des conteneurs requis ; et
la réalisation (S103, S303, S404, S504, S603, S705) d'une opération de sortie sur les conteneurs devant être sortis, pour permettre à des matériaux devant être stockés d'être placés dans les conteneurs devant être sortis qui ont subi l'opération de sortie pour le stockage ;
dans lequel les informations de demande comprennent la stratégie de sélection de conteneurs, le type de conteneur et la quantité de compartiments vides dans un conteneur, la stratégie de sélection de conteneurs consiste à sélectionner des conteneurs en fonction de la quantité de compartiments vides dans un conteneur, et la détermination (S102) de conteneurs devant être sortis en fonction des informations de demande pour des conteneurs requis comprend :
la détermination (S402) de conteneurs avec un type de conteneur correspondant au type de conteneur dans les informations de demande et ayant des compartiments vides dans un entrepôt de conteneurs en tant que premiers conteneurs présélectionnés ; et
la détermination (S403) des conteneurs devant être sortis parmi les premiers conteneurs présélectionnés en fonction de la quantité de compartiments vides dans un conteneur dans les informations de demande, pour rendre une somme totale de la quantité de compartiments vides dans tous les conteneurs devant être sortis supérieure ou égale à la quantité de compartiments vides dans un conteneur dans les informations de demande ;
dans lequel la détermination (S403) des conteneurs devant être sortis parmi les premiers conteneurs présélectionnés en fonction de la quantité de compartiments vides dans un conteneur dans les informations de demande comprend :
la réalisation d'une addition séquentielle selon un ordre croissant ou un ordre décroissant de la quantité de compartiments vides dans les premiers conteneurs présélectionnés ; et
si une valeur de somme obtenue de la quantité de compartiments vides est inférieure à la quantité de compartiments vides dans un conteneur dans les informations de demande lorsque l'addition atteint un N^{ième} conteneur et que la valeur de somme obtenue est supérieure ou égale à la quantité de compartiments vides dans un conteneur dans les informations de demande lorsque l'addition atteint un (N+1)^{ième} conteneur, la détermination d'un premier conteneur au (N+1)^{ième} conteneur en tant que conteneurs devant être sortis.

2. Procédé selon la revendication 1, dans lequel les informations de demande comprennent la stratégie de sélection de conteneurs, le type de conteneur et la quantité de conteneurs, la stratégie de sélection de conteneurs consiste à sélectionner des conteneurs complètement vides, et la détermination (S102) de conteneurs devant être sortis en fonction des informations de demande pour des conteneurs requis comprend :
la détermination (S302), à partir d'un entrepôt de conteneurs en fonction de la quantité de conteneurs indiquée dans les informations de demande, de conteneurs complètement vides correspondant au type de conteneur indiqué dans les informations de demande en tant que conteneurs devant être sortis.

3. Procédé selon la revendication 2, dans lequel la détermination (S302), à partir d'un entrepôt de conteneurs en fonction de la quantité de conteneurs indiquée dans les informations de demande, de conteneurs complètement vides correspondant au type de conteneur indiqué dans les informations de demande en tant que conteneurs devant être sortis comprend :
l'utilisation des conteneurs complètement vides correspondant au type de conteneur indiqué dans les informations de demande dans l'entrepôt de conteneurs en tant que conteneurs préliminaires devant être sortis ;
l'acquisition de distances entre les conteneurs préliminaires devant être sortis et des points de sortie correspondants ; et
la sélection, parmi les conteneurs préliminaires devant être sortis en fonction des distances et de la quantité de conteneurs, de conteneurs correspondant à la quantité de conteneurs en tant que conteneurs devant être sortis.

4. Procédé selon la revendication 1, dans lequel les informations de demande comprennent la stratégie de sélection de conteneurs, le SKU et le volume total de matériaux devant être stockés ou la quantité totale de matériaux devant être stockés, la stratégie de sélection de conteneurs consiste à sélectionner des conteneurs en fonction du SKU, et la détermination (S102) de conteneurs devant être sortis en fonction des informations de demande pour des conteneurs requis comprend :
la détermination (S502) de conteneurs avec un SKU chargé cohérent avec le SKU dans les informations de demande dans un entrepôt de conteneurs en tant que deuxièmes conteneurs présélectionnés ; et
la sélection (S503) des conteneurs devant être sortis parmi les deuxièmes conteneurs présélectionnés en fonction du volume total ou de la quantité totale de matériaux devant être stockés, pour rendre une valeur de somme de capacités restantes de tous les conteneurs devant être sortis supérieure ou égale au volume total de matériaux devant être stockés ou à la quantité totale de matériaux devant être stockés.

5. Procédé selon la revendication 4, dans lequel la sélection (S503) des conteneurs devant être sortis parmi les deuxièmes conteneurs présélectionnés en fonction du volume total ou de la quantité totale de matériaux devant être stockés, pour rendre une valeur de somme de capacités restantes de tous les conteneurs devant être sortis supérieure ou égale au volume total de matériaux devant être stockés ou à la quantité totale de matériaux devant être stockés comprend :
l'acquisition de capacités restantes des deuxièmes conteneurs présélectionnés, la réalisation d'une addition séquentielle selon un ordre croissant ou un ordre décroissant des capacités restantes, et
si une valeur de somme obtenue est inférieure au volume total de matériaux devant être stockés ou à la quantité totale de matériaux devant être stockés lorsque l'addition atteint un N^{ième} conteneur et que la valeur de somme obtenue est supérieure ou égale au volume total de matériaux devant être stockés ou à la quantité totale de matériaux devant être stockés lorsque l'addition atteint un (N+1)^{ième} conteneur, la détermination d'un premier conteneur au (N+1)^{ième} conteneur en tant que conteneurs devant être sortis.

6. Procédé selon la revendication 4, dans lequel le procédé comprend en outre :
si une valeur de somme de capacités restantes de tous les deuxièmes conteneurs présélectionnés est inférieure au volume total de matériaux devant être stockés ou à la quantité totale de matériaux devant être stockés, l'acquisition d'un enregistrement d'emballage historique correspondant au SKU indiqué dans les informations de demande ;
la détermination d'un type de conteneur de conteneurs avec le nombre d'utilisations le plus élevé dans l'enregistrement d'emballage historique en tant que type de conteneur des conteneurs devant être sortis ; et
la détermination des conteneurs devant être sortis en fonction du type de conteneur des conteneurs devant être sortis, de la valeur de somme de capacités restantes des deuxièmes conteneurs présélectionnés et du volume total de matériaux devant être stockés ou de la quantité totale de matériaux devant être stockés indiqués dans les informations de demande.

7. Procédé selon la revendication 6, dans lequel la détermination des conteneurs devant être sortis en fonction du type de conteneur des conteneurs devant être sortis, de la valeur de somme de capacités restantes des deuxièmes conteneurs présélectionnés et du volume total de matériaux devant être stockés ou de la quantité totale de matériaux devant être stockés indiqués dans les informations de demande comprend :
la détermination d'une valeur de différence de capacité en fonction de la valeur de somme de capacités restantes des deuxièmes conteneurs présélectionnés et du volume total ou de la quantité totale de matériaux devant être stockés indiqués dans les informations de demande ;
la sélection d'au moins un conteneur complètement vide correspondant au type de conteneur des conteneurs devant être sortis, pour rendre une capacité totale du conteneur complètement vide correspondant au type de conteneur des conteneurs devant être sortis supérieure ou égale à la valeur de différence de capacité ; et
la détermination des deuxièmes conteneurs présélectionnés et de l'au moins un conteneur complètement vide correspondant au type de conteneur des conteneurs devant être sortis en tant que conteneurs devant être sortis.

8. Procédé selon la revendication 1, dans lequel les informations de demande comprennent la stratégie de sélection de conteneurs et les codes de conteneurs, la stratégie de sélection de conteneurs consiste à sélectionner des conteneurs en fonction des codes de conteneurs, et la détermination (S102) de conteneurs devant être sortis en fonction des informations de demande pour des conteneurs requis comprend :
la détermination (S602) de conteneurs avec des informations de code cohérentes avec les codes de conteneurs indiqués dans les informations de demande dans un entrepôt de conteneurs en tant que conteneurs devant être sortis.

9. Procédé selon la revendication 1, dans lequel les informations de demande comprennent un volume de matériaux devant être stockés et la quantité totale de matériaux devant être stockés, et la détermination (S102) de conteneurs devant être sortis en fonction des informations de demande pour des conteneurs requis comprend :
la détermination (S702) d'un type de conteneur des conteneurs devant être sortis en fonction du volume de matériaux devant être stockés ;
la détermination (S703) de conteneurs avec un type de conteneur cohérent avec le type de conteneur des conteneurs devant être sortis dans un entrepôt de conteneurs en tant que troisièmes conteneurs présélectionnés ; et
la détermination (S704) des conteneurs devant être sortis en fonction de la quantité totale de matériaux devant être stockés, d'un coefficient de proportion prédéfini et de la quantité de compartiments vacants des troisièmes conteneurs présélectionnés.

10. Appareil de détermination de conteneurs devant être sortis, comprenant :
un module de réception (91), qui est configuré pour recevoir des informations de demande pour des conteneurs requis, dans lequel les informations de demande comprennent une ou plusieurs des informations suivantes : une stratégie de sélection de conteneurs, un type de conteneur, la quantité de conteneurs, la quantité de compartiments vides dans un conteneur, un volume total de matériaux devant être stockés, la quantité totale de matériaux devant être stockés, des codes de conteneurs et un SKU ; et
un module de traitement (92), qui est configuré pour déterminer des conteneurs devant être sortis en fonction des informations de demande pour des conteneurs requis, dans lequel
le module de traitement (92) est en outre configuré pour réaliser une opération de sortie sur les conteneurs devant être sortis, pour permettre à des matériaux devant être stockés d'être placés dans les conteneurs devant être sortis qui ont subi l'opération de sortie pour le stockage ;
dans lequel les informations de demande comprennent la stratégie de sélection de conteneurs, le type de conteneur et la quantité de compartiments vides dans un conteneur, la stratégie de sélection de conteneurs consiste à sélectionner des conteneurs en fonction de la quantité de compartiments vides dans un conteneur ;
dans lequel lorsque le module de traitement (92) est configuré pour déterminer des conteneurs devant être sortis en fonction des informations de demande pour des conteneurs requis, le module de traitement (92) est configuré pour :
déterminer des conteneurs avec un type de conteneur correspondant au type de conteneur dans les informations de demande et ayant des compartiments vides dans un entrepôt de conteneurs en tant que premiers conteneurs présélectionnés ; et
déterminer les conteneurs devant être sortis parmi les premiers conteneurs présélectionnés en fonction de la quantité de compartiments vides dans un conteneur dans les informations de demande, pour rendre une somme totale de la quantité de compartiments vides dans tous les conteneurs devant être sortis supérieure ou égale à la quantité de compartiments vides dans un conteneur dans les informations de demande ;
lorsque le module de traitement (92) est configuré pour déterminer les conteneurs devant être sortis parmi les premiers conteneurs présélectionnés en fonction de la quantité de compartiments vides dans un conteneur dans les informations de demande, le module de traitement (92) est configuré pour :
réaliser une addition séquentielle selon un ordre croissant ou un ordre décroissant de la quantité de compartiments vides dans les premiers conteneurs présélectionnés ; et
si une valeur de somme obtenue de la quantité de compartiments vides est inférieure à la quantité de compartiments vides dans un conteneur dans les informations de demande lorsque l'addition atteint un N^{ième} conteneur et que la valeur de somme obtenue est supérieure ou égale à la quantité de compartiments vides dans un conteneur dans les informations de demande lorsque l'addition atteint un (N+1)^{ième} conteneur, déterminer un premier conteneur au (N+1)^{ième} conteneur en tant que conteneurs devant être sortis.

11. Support de stockage lisible par ordinateur, dans lequel le support de stockage lisible par ordinateur est configuré pour stocker des instructions exécutables par ordinateur, et un processeur, lors de l'exécution des instructions exécutables par ordinateur, met en oeuvre le procédé selon l'une quelconque des revendications 1 à 9.
